# EUROPÄISCHE PATENTSCHRIFT

(11) **EP 3 014 633 B1**
(45) Veröffentlichungstag und Bekanntmachung des Hinweises auf die Patenterteilung: **31.05.2017**
(21) Anmeldenummer: 14766955.0
(22) Anmeldetag: 11.09.2014
(51) Int. Cl.: H01C 3/16, H01C 7/22, H02K 19/14, H02K 19/36

(54) **WIDERSTANDSMODUL ZUR ANLAUFMOMENTERHÖHUNG FÜR EINEN LÄUFER EINER ELEKTRISCHEN MASCHINE MIT EINER LÄUFERWICKLUNG**
RESISTANCE MODULE FOR INCREASING THE STARTING TORQUE OF A ROTOR OF AN ELECTRIC MACHINE WITH A ROTOR WINDING
MODULE DE RÉSISTANCE POUR L'AUGMENTATION DU COUPLE DE DÉMARRAGE POUR UN ROTOR D'UNE MACHINE ÉLECTRIQUE DOTÉE D'UN ENROULEMENT ROTORIQUE

(30) Priorität: 26.09.2013 EP 13186076
(43) Veröffentlichungstag der Anmeldung: 04.05.2016
(73) Patentinhaber: Siemens Aktiengesellschaft, 80333 München (DE)
(72) Erfinder: STING, Joachim, 13591 Berlin (DE)
(86) Internationale Anmeldenummer: PCT/EP2014/069349
(87) Internationale Veröffentlichungsnummer: WO 2015/043966

(56) Entgegenhaltungen:
- EP-A1- 2 605 252
- EP-A2- 1 071 192
- CN-A- 102 170 257
- CN-U- 2 093 460
- DE-A1-102011 004 660
- FR-A1- 2 836 592
- US-A- 4 319 216
- US-A- 5 322 672

## Beschreibung

Die Erfindung betrifft ein Widerstandsmodul zur Anlaufmomenterhöhung für einen Läufer einer elektrischen Maschine mit einer Läuferwicklung. Weiterhin betrifft die Erfindung eine Erregermaschine, einen Läufer und eine elektrische Maschine, welche jeweils zumindest ein derartiges Widerstandsmodul aufweisen.

Ein derartiges Widerstandsmodul kommt beispielsweise bei fremderregten Synchronmaschinen mit einer Läuferwicklung zum Einsatz. Während der Anlaufphase weist eine solche elektrische Maschine einen vergleichsweise großen Schlupf auf und läuft asynchron hoch. Dabei ist bekannt, dass eine Verringerung des Anlaufstroms in der Läuferwicklung zu einer Erhöhung des Anlaufmoments führt.

Aus der DE 39 59 52 ist ein Elektromotor mit einem Läufer mit zwei Läuferwicklungen bekannt, wobei die radial weiter außen angeordnete Läuferwicklung einen großen elektrischen Widerstand und die radial weiter innen angeordnete Läuferwicklung einen kleinen elektrischen Widerstand aufweist. Während der Anlaufperiode weist der Elektromotor einen großen Schlupf auf und die Läuferwicklung mit dem großen elektrischen Widerstand bewirkt ein hohes Anlaufmoment.

Aus der EP 2 605 252 Al ist ein Startwiderstand für eine elektrische Synchronmaschine mit einem Leiter bekannt, der um eine zentrale Achse in mehreren radialen Lagen gewunden ist, um eine Widerstandsspule zu bilden. Zumindest zwei benachbarte radiale Lagen sind in entgegengesetzte Richtungen gewunden, um die magnetischen Felder aufzuheben, die durch den Strom in den einzelnen radialen Lagen verursacht wird.

Aus der EP 1 071 192 A2 ist ein elektrischer Schenkelpol-Synchronmotor mit schleifringloser Erregung und Anlasswiderstand bekannt. Dieser Widerstand ist als wie bifilare Spule aus einem flachen, isolierten Kupferdraht gewickelt.

Aus der US 4 319 216 A ist ein Entladewiderstand bekannt, der auf einen rotierbaren Schaft eines dynamoelektrischen Gerätes zu montieren ist. Der Entladewiderstand weist ein Paar von spiralförmig gewundenen, isolierten Widerstandselementen auf, die in etwa koaxial zum Schaft angeordnet sind. Jedes der Widerstandselemente ist spiralförmig und flach gewunden und weist eine Bohrung auf, deren effektiver Durchmesser größer als jener des Schaftes ist. Zwischen benachbarten Windungen sind Isolierlagen vorgesehen.

Aus der CN 102 170 257 A ist ein rotierbares Steuerungsmodul eines bürstenlosen Synchronmotors bekannt, wobei das Steuerungsmodul unter anderem einen Stadtwiderstand aufweist.

Der Erfindung liegt die Aufgabe zugrunde, eine Alternative zu bekannten Lösungen zur Erhöhung des Anlaufmoments bereitzustellen.

Diese Aufgabe wird durch ein Widerstandsmodul der eingangs genannten Art dadurch gelöst, dass das Widerstandsmodul aufweist:
- einen ersten Anschlusspunkt und einen zweiten Anschlusspunkt,
- zumindest zwei elektrisch leitende Lagen,
wobei die zumindest zwei Lagen mit dem ersten Anschlusspunkt und mit dem zweiten Anschlusspunkt elektrisch verbunden sind,
wobei die zumindest zwei Lagen jeweils eine Achse des Widerstandsmoduls zumindest teilweise in Umfangsrichtung umschließen und jeweils einen Lagenanfangspunkt und einen Lagenendpunkt aufweisen,
- eine jeweilige erste Isolierschicht, welche jeweils zwischen zwei Lagen angeordnet ist,
- einen jeweiligen Verbindungspunkt, an welchem der Lagenendpunkt einer jeweiligen Lage mit dem Lagenanfangspunkt der jeweils folgenden Lage elektrisch verbunden ist,
wobei zumindest eine der Lagen in Umfangsrichtung mäanderförmig ausgestaltet ist und die Mäander nach radial außen ragen,
wobei das Widerstandsmodul zumindest ein Befestigungselement aufweist, welches jeweils zwischen zwei in Umfangsrichtung benachbarten Mäandern und radial außen an den zumindest zwei Lagen angeordnet ist.

Weiterhin wird diese Aufgabe durch eine Erregermaschine der eingangs genannten Art dadurch gelöst, dass die Erregermaschine aufweist:
- eine drehfest mit einer Welle der elektrischen Maschine verbindbare Sekundärwicklung,
- einen mit der Sekundärwicklung elektrisch verbundenen Gleichrichter,
- ein mit dem Gleichrichter elektrisch verbundenes, erfindungsgemäßes Widerstandsmodul.

Ferner wird diese Aufgabe durch einen Läufer der eingangs genannten Art dadurch gelöst, dass der Läufer ein erfindungsgemäßes Widerstandsmodul oder eine erfindungsgemäße Erregermaschine sowie eine Läuferwicklung, welche mit dem Widerstandsmodul elektrisch verbunden ist, aufweist.

Schließlich wird diese Aufgabe durch eine elektrische Maschine der eingangs genannten Art dadurch gelöst, dass die elektrische Maschine ein erfindungsgemäßes Widerstandsmodul oder eine erfindungsgemäße Erregermaschine oder einen erfindungsgemäßen Läufer aufweist.

Zwischen dem ersten Anschlusspunkt und dem zweiten Anschlusspunkt sind die zumindest zwei elektrisch leitenden Lagen geschaltet, welche jeweils aus einem widerstandsbehafteten Material sind. Durch eine Kopplung des Widerstandsmoduls mit der Läuferwicklung, das heißt insbesondere durch eine Reihenschaltung des Widerstandsmoduls mit der Läuferwicklung, kann der während der Anlaufphase durch die Läuferwicklung fließende Anlaufstrom verringert werden, was zu einer Erhöhung des Anlaufmoments führt. Somit ermöglicht das erfindungsgemäße Widerstandsmodul, eine elektrische Maschine während der Anlaufphase mit einer erhöhten Dynamik auszustatten.

Das Widerstandsmodul weist zumindest zwei Lagen eines widerstandsbehafteten Materials auf, wobei unterschiedliche Lagen auch unterschiedliche Materialien aufweisen können. Die Lagen sind elektrisch in Reihe geschaltet, indem jeweils der Lagenendpunkt einer Lage mit dem Lagenanfangspunkt der folgenden Lage verbunden ist. Lediglich am Anfang der Reihe ist der Lagenanfangspunkt der ersten Lage mit dem ersten Anschlusspunkt des Widerstandsmoduls verbunden, wobei der Lagenendpunkt der letzten Lage mit dem zweiten Anschlusspunkt des Widerstandsmoduls verbunden ist. Zwischen den jeweiligen Lagen ist dabei eine erste Isolierschicht angebracht, welche einen Kurzschluss bzw. eine unerwünschte Erniedrigung des Widerstands verhindert.

Die elektrisch in Reihe geschalteten Lagen können dabei insbesondere in radialer oder in axialer Richtung aufeinanderfolgend angeordnet oder gestapelt sein.

Die jeweiligen Lagen umschließen dabei die Achse des Widerstandsmoduls und somit auch des Läufers bzw. der elektrischen Maschine zumindest teilweise, wobei die jeweilige Lage die Achse insbesondere entlang zumindest 3/4 des vollen Umfangs umfasst bzw. umschließt.

Der gewünschte elektrische Widerstand kann dadurch realisiert werden, dass ein entsprechendes Material gewählt wird und vor allem eine hierfür erforderliche Anzahl von Lagen verwendet wird. Somit ist das Widerstandsmodul modular aufbaubar, wodurch es leicht und günstig herzustellen ist. Hinzu kommt, dass die zumindest zwei Lagen eine vergleichsweise große Oberfläche aufweisen, was für eine gute Wärmeabführung und damit eine gute Kühlung des Widerstandsmoduls förderlich ist.

Die mäanderförmig ausgestaltete Lage kann beispielsweise mit einem Wellblech verglichen werden, welches zumindest teilweise in Umfangsrichtung um die Achse herumgeführt wird. Dabei können auch mehrere der Lagen bzw. alle Lagen des Widerstandsmoduls mäanderförmig ausgestaltet sein.

Die jeweilige, mäanderförmig geschwungene Lage weist somit nach außen ragende Mäander auf, wobei innerhalb der jeweiligen Lage der elektrische Widerstand für einen entsprechenden elektrischen Strom durch einen verlängerten, zurückzulegenden Weg vergrößert wird. Somit erlaubt ein derartiges Widerstandsmodul einen vergleichsweise großen elektrischen Widerstand bei dennoch kompakter Bauweise.

Gleichzeitig wird die Oberfläche der zumindest zwei Lagen vergrößert, wodurch die Kühlleistung stark erhöht werden kann. Zusätzlich wirken die Mäander wie Propellerblätter eines Radiallüfters, so dass die Kühlung weiter vorteilhaft beeinflusst wird. Prinzipiell ist dabei auch denkbar, dass das Widerstandsmodul mehrere mäanderförmig ausgestaltete Lagen aufweist, welche in axialer Richtung hintereinander angeordnet sind und in Umfangsrichtung leicht gegeneinander versetzt sind, wodurch Propellerblätter ähnlich jenen eines Axiallüfter nachgebildet werden. Diese Ausgestaltung erlaubt zum einen eine leistungsstarke Kühlung des Widerstandsmoduls und fördert zum anderen einen Kühlluftstrom in axialer Richtung, der zur Kühlung des Läufers oder anderer Bauteile der elektrischen Maschine verändert werden kann.

Schließlich erlauben die Mäander eine praktisch ungehemmte Wärmeausdehnung der jeweiligen Lage, ohne dass dadurch mechanische Spannungen erzeugt werden, die für die Stabilität des Widerstandsmoduls problematisch sein könnten.

Das zumindest eine Befestigungselement schließt sich demnach radial außen an die zumindest zwei Lagen an bzw. ist an der radialen Außenfläche der zumindest zwei Lagen angeordnet. In Umfangsrichtung betrachtet ist das zumindest eine Befestigungselement zwischen zwei benachbarten, nach radial außen ragenden Mäandern angeordnet.

Wie oben erläutert, kann die mäanderförmig ausgestaltete Lage mit einem Wellblech verglichen werden, wobei das zumindest eine Befestigungselement gemäß dieser Analogie an der Außenseite des Wellblechs in einem Tal zwischen zwei Bergen angeordnet ist.

Somit erlaubt das zumindest eine Befestigungselement eine zuverlässige Aufnahme radial nach außen gerichteter Fliehkräfte, welche auf die zumindest zwei Lagen während der Rotation des Widerstandsmoduls um die Achse wirken. Beispielsweise kann das jeweilige Befestigungselement nach radial innen formschlüssig an die zumindest zwei Lagen anschließen, so dass eine große Kontaktfläche zur Aufnahme mechanischer Kräfte zur Verfügung steht, wodurch eine Beschädigung insbesondere der Isolierung der zumindest zwei Lagen verhindert werden kann. Zur Verbindung mit weiteren Maschinenelementen kann das zumindest eine Befestigungselement beispielsweise einen als Bolzen ausgestalteten Bereich aufweisen, welcher mittels einer Schraub- oder Steckverbindung oder dergleichen mit den weiteren Maschinenelementen, insbesondere mit einer Welle bzw. mit dem Läufer der elektrischen Maschine, verbunden wird.

Daher wird durch das zumindest eine Befestigungselement, insbesondere durch mehrere Befestigungselemente, die mechanische Stabilität des Widerstandsmoduls stark erhöht. Vorzugsweise ist hierfür jeweils ein Befestigungselement für jeden in Umfangsrichtung befindlichen Zwischenraum zwischen zwei benachbarten Mäandern vorgesehen. Insbesondere kann das jeweilige Befestigungselement drehfest mit der Nabe verbunden sein.

Das Widerstandsmodul kann dabei in einer Erregermaschine für einen Läufer einer fremderregten Synchronmaschine verwendet werden. Derartige Maschinen können beispielsweise als Synchronmotor ausgelegt werden. Weiterhin kann das Widerstandsmodul für einen Läufer einer solchen fremderregten Synchronmaschine eingesetzt werden.

Vorzugsweise ist die elektrische Maschine mit einer elektrischen Leistung von mindestens 1 MW, insbesondere mehr als 10 MW betreibbar. Dabei kann die elektrische Maschine als Motor ausgeführt sein und beispielsweise eine Synchronmaschine oder eine fremderregte Synchronmaschine sein. So ist zum Beispiel denkbar, dass es sich bei der elektrischen Maschine um einen Ringmotor oder einen Mühlenantriebsmotor handelt.

Bei einer vorteilhaften Ausgestaltung der Erfindung sind die zumindest zwei Lagen koaxial zur Achse angeordnet und schraubenbahnförmig ausgestaltet.

Für die schraubenbahnförmige Ausgestaltung der zumindest zwei Lagen kann eine erste Lage in Umfangsrichtung beispielsweise eine fast vollständige Umdrehung entlang eines Kreises mit einem im Wesentlichen konstanten Radius vollziehen, wobei in axialer Richtung ein Versatz zwischen dem Lagenanfangspunkt und dem Lagenendpunkt der ersten Lage entsteht. Eine auf die erste Lage folgende zweite Lage schließt sich nach dem Verbindungspunkt an die erste Lage an und ist analog zur ersten Lage ausgeformt. Weiterhin kann das Widerstandsmodul eine Mehrzahl derartiger Lagen aufweisen.

Bei einer alternativen vorteilhaften Ausgestaltung der Erfindung verlaufen jeweils benachbarte Lagen von ihrem jeweiligen Lagenanfangspunkt zu ihrem jeweiligen Lagenendpunkt im entgegen gesetzten Drehsinn.

Beispielsweise kann eine erste Lage bei einer axialen Draufsicht auf das Widerstandsmodul im Uhrzeigersinn und eine in Reihe zur ersten Lage geschaltete zweite Lage entgegen dem Uhrzeigersinn verlaufen. Von Vorteil ist dabei, dass ein derartiges Widerstandsmodul lediglich einen elektrischen Widerstand darstellt und sich magnetisch neutral verhält, also insbesondere keine Spule bildet, welche ein axial gerichtetes Magnetfeld erzeugen würde.

Bei einer weiteren vorteilhaften Ausgestaltung der Erfindung ist zumindest eine der Lagen als Flachmaterial oder Blech ausgestaltet und/oder besteht hauptsächlich aus Aluminium.

Insbesondere kann für zumindest eine der Lagen ein Elektroblech oder eine Anordnung zum Einsatz kommen, welche einem Blechpaket einer elektrischen Maschine ähnlich ist. Derart aufgebaute Lagen des Widerstandsmoduls sind besonders günstig erhältlich und verleihen dem Widerstandsmodul eine große mechanische Robustheit.

Aluminium weist eine vergleichsweise geringe Dichte auf, so dass die Dynamik des Läufers bzw. der elektrischen Maschine insbesondere während der Anlaufphase zusätzlich verbessert werden kann.

Bei einer weiteren vorteilhaften Ausgestaltung der Erfindung weist das Widerstandsmodul eine koaxial zur Achse angeordnete Nabe auf, mit welcher die zumindest zwei Lagen drehfest verbunden sind, wobei die Nabe drehfest mit einer Welle der elektrischen Maschine verbindbar ist.

Insbesondere können die zumindest zwei Lagen radial außen an der Nabe befestigt sein, um die drehfeste Verbindung zwischen den zumindest zwei Lagen und der Nabe herzustellen. Zur Herstellung der Verbindung können die zumindest zwei Lagen aber auch zumindest teilweise in axialer Richtung versetzt zu Nabe angeordnet sein.

Die Nabe kann schließlich mit einer Welle bzw. dem Läufer der elektrischen Maschine drehfest verbunden werden, um das Widerstandsmodul mechanisch mit dem Läufer der elektrischen Maschine zu koppeln. Diese Kopplung kann beispielsweise durch Spannbolzen erreicht werden, welche durch axial durch die Nabe laufende Bohrungen gesteckt werden und die Nabe mit der Welle bzw. dem Läufer verspannen. Insbesondere können hierfür isolierte Spannbolzen zum Einsatz kommen, welche gegenüber der Nabe und den zumindest zwei Lagen mittels einer isolierenden Beschichtung elektrisch isoliert sind, wobei zusätzlich eine Isolationsschicht zwischen der Nabe und der Welle bzw. dem Läufer vorgesehen sein kann.

Bei einer weiteren vorteilhaften Ausgestaltung der Erfindung ist dabei eine zweite Isolierschicht zwischen der Nabe und den zumindest zwei Lagen angeordnet.

Die zweite Isolierschicht bietet eine besonders zuverlässige Möglichkeit, die zumindest zwei Lagen elektrisch von der Nabe damit von der Welle bzw. dem Läufer zu isolieren.

Bei einer weiteren vorteilhaften Ausgestaltung der Erfindung ist das zumindest eine Befestigungselement fest mit den zumindest zwei Lagen verbunden, wobei eine dritte Isolierschicht zwischen dem zumindest einen Befestigungselement und den zumindest zwei Lagen angeordnet ist.

Durch die dritte Isolierschicht wird eine gute elektrische Isolierung zwischen den zumindest zwei Lagen und dem jeweiligen Befestigungselement gewährleistet.

Bei einer weiteren vorteilhaften Ausgestaltung der Erfindung weist das Widerstandsmodul dabei einen koaxial zur Achse angeordneten Befestigungsring auf, welcher in axialer Richtung an die zumindest zwei Lagen anschließend angeordnet ist, wobei das zumindest eine Befestigungselement drehfest mit dem Befestigungsring verbunden ist.

Das jeweilige Befestigungselement kann dabei derart ausgeführt sein, dass es jeweils in axialer Richtung in den Befestigungsring eingreift, wodurch die drehfeste Verbindung des jeweiligen Befestigungselements mit dem Befestigungsring hergestellt wird. Alternativ oder zusätzlich kann umgekehrt vorgesehen sein, dass der Befestigungsring axiale Vorsprünge aufweist, welche in das jeweilige Befestigungselement eingreifen.

Der Befestigungsring verleiht dem Widerstandsmodul somit zusätzliche Stabilität, da radial nach außen gerichtete Fliehkräfte, welche auf die zumindest zwei Lagen wirken, über das jeweilige Befestigungselement an den Befestigungsring übertragbar sind.

Zusätzlich kann vorgesehen sein, dass der Befestigungsring zumindest ein Stützelement aufweist, welches jeweils radial außen am radialen Ende zumindest eines der Mäander angeordnet ist und mittels welchem radial nach außen gerichtete Kräfte der jeweiligen Lage aufnehmbar sind.

Insbesondere ist der Befestigungsring drehfest mit der Nabe verbunden, wobei auch denkbar ist, dass der Befestigungsring einstückig mit der Nabe ausgeführt ist.

Die erfindungsgemäße Erregermaschine kann beispielsweise weiterhin eine stationäre angeordnete Primärwicklung aufweisen, mit welcher ein elektrischer Strom an die Sekundärwicklung übertragbar ist. Weiterhin können Kondensatoren und gegebenenfalls ohmsche Widerstände zur Glättung des vom Gleichrichter gleichgerichteten Sekundärstroms vorgesehen sein. Dabei ist die Läuferwicklung mit dem Sekundärstrom versorgbar, wobei das Widerstandsmodul in Reihe mit der Läuferwicklung geschaltet ist.

Bei einer weiteren vorteilhaften Ausgestaltung der Erfindung sind die zumindest zwei Lagen des Widerstandsmoduls mittels eines ersten Schalters bzw. mittels eines zweiten Schalters überbrückbar.

Das Widerstandsmodul erhöht den elektrischen Widerstand, was während der Anlaufphase des Läufers zu einem erhöhten Anlaufmoment und somit zu einer erhöhten Dynamik des Läufers führt. Sobald die elektrische Maschine hochgefahren ist und beispielsweise der Läufer seine Betriebsdrehzahl erreicht hat, kann auf den zusätzlichen elektrischen Widerstand des Widerstandsmoduls verzichtet werden. Hierzu ist der erste Schalter bzw. der zweite Schalter parallel zum Widerstandsmodul geschaltet, so dass ein Kurzschluss des jeweiligen Schalters das Widerstandsmodul überbrückt.

Der jeweilige Schalter kann dabei als mechanisch betätigbares Bauelement oder als elektronischer Schalter ausgeführt sein. Insbesondere kann der jeweilige Schalter als Transistor oder Thyristor ausgestaltet werden, welcher insbesondere von einer Steuerungseinheit angesteuert wird.

Insbesondere kann der erste Schalter als Teil des Widerstandsmoduls oder als Teil der Erregermaschine und der zweite Schalter als Teil des Läufers oder als Teil der elektrischen Maschine ausgeführt sein. Denkbar ist auch, lediglich insgesamt einen Schalter zur Überbrückung des Widerstandsmoduls vorzusehen. Die Steuerungseinheit kann dabei beispielsweise als Teil des Widerstandsmoduls, der Erregermaschinen bzw. des Läufers ausgeführt sein.

Im Folgenden wird die Erfindung anhand der in den Figuren dargestellten Beispiele näher beschrieben und erläutert. Es zeigen:
- FIG 1: ein erstes Beispiel eines Widerstandsmoduls,
- FIG 2: ein zweites Beispiel,
- FIG 3: ein drittes Beispiel,
- FIG 4: ein Ausführungsbeispiel des erfindungsgemäßen Widerstandsmoduls, und
- FIG 5: einen Schaltplan eines Ausführungsbeispiels einer erfindungsgemäßen elektrischen Maschine.

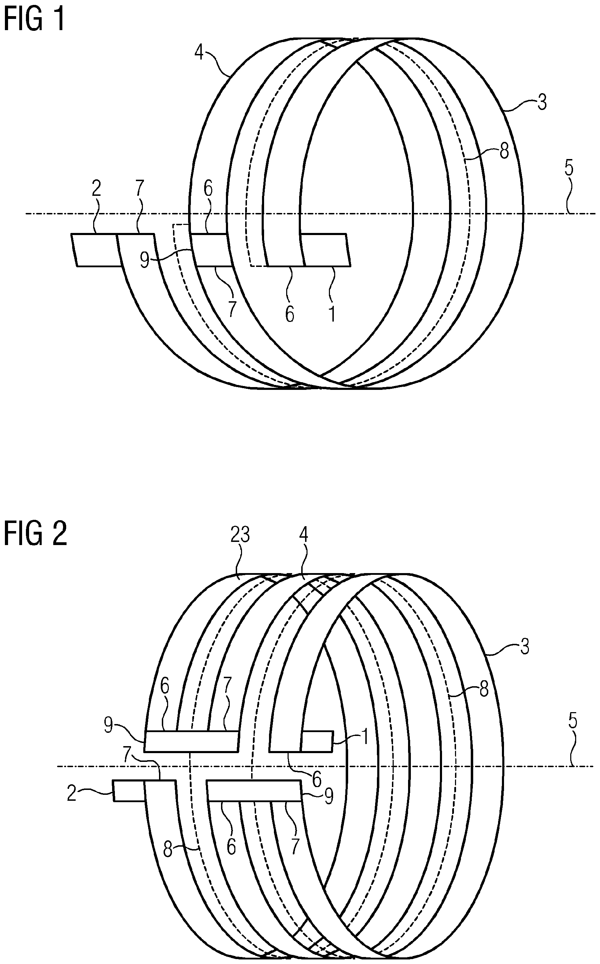

Figur 1 zeigt ein erstes Beispiel eines Widerstandsmoduls, welches nicht von der Erfindung umfasst wird. Das Widerstandsmodul weist einen ersten Anschlusspunkt 1 und einen zweiten Anschlusspunkt 2 auf, zwischen welchen eine erste Lage 3 und eine zweite Lage 4 elektrisch geschaltet sind. Die beiden Lagen 3, 4 sind elektrisch leitend, bestehen hauptsächlich aus einem widerstandbehafteten Material und weisen jeweils einen Lagenanfangspunkt 6 und einen Lagenendpunkt 7 auf. Dabei ist die erste Lage 3 an deren Lagenendpunkt 7 mit der zweiten Lage 4 an deren Lagenanfangspunkt 8 über einen Verbindungspunkt 9 elektrisch verbunden, wobei die beiden Lagen 3, 4 ansonsten mittels einer zwischen den beiden Lagen 3, 4 angeordneten ersten Isolierschicht 8 elektrisch voneinander isoliert sind. Die beiden Lagen 3, 4 sind im Wesentlichen U-förmig ausgeformt und umschließen eine Achse 5 des Widerstandsmoduls zumindest teilweise.

Im Rahmen des ersten Beispiels sind die beiden Lagen 3, 4 koaxial zur Achse 5 angeordnet und schraubenbahnförmig ausgestaltet. Hierfür ist die erste Lage 3 zwischen ihrem Lagenanfangspunkt 6 und ihrem Lagenendpunkt 7 in Umfangsrichtung entlang eines Kreises mit einem im Wesentlichen konstanten Radius ausgeformt, wobei in axialer Richtung ein Versatz zwischen ihrem Lagenanfangspunkt 6 und ihrem Lagenendpunkt 7 vorhanden ist. Die zweite Lage 4 schließt sich nach dem Verbindungspunkt 9 an die erste Lage 3 an und ist analog zur ersten Lage 3 ausgeformt, um die Schraubenbahn fortzusetzen.

Figur 2 zeigt ein zweites Beispiel eines Widerstandsmoduls. Dabei bezeichnen gleiche Bezugszeichen wie in Figur 1 gleiche Gegenstände.

Im Unterschied zum Widerstandsmodul des ersten Beispiels sind drei Lagen 3, 4, 23 vorgesehen, welche nunmehr keine schraubenbahnförmige Ausgestaltung aufweisen. Vielmehr weisen die Lagen 3, 4, 23 zwischen ihrem jeweiligen Lagenanfangspunkt 6 und ihrem jeweiligen Lagenendpunkt 7 keinen axialen Versatz auf. Die erste Lage 3 stellt eine elektrische Verbindung zwischen dem ersten Anschlusspunkt 1 und dem Verbindungspunkt 9 zwischen der ersten Lage 3 und der zweiten Lage 4 dar, wobei diese Verbindung in der Darstellung der Figur 2 in Uhrzeigersinn verläuft. Hingegen stellt die zweite Lage 4 eine elektrische Verbindung zwischen dem Verbindungspunkt 9 zwischen der ersten Lage 3 und der zweiten Lage 4 einerseits und dem Verbindungspunkt 9 zwischen der zweiten Lage 4 und der dritten Lage 23 andererseits dar, wobei diese Verbindung entgegen dem Uhrzeigersinn verläuft. Schließlich stellt die dritte Lage 23 eine entsprechende Verbindung, welche im Uhrzeigersinn verläuft, dar.

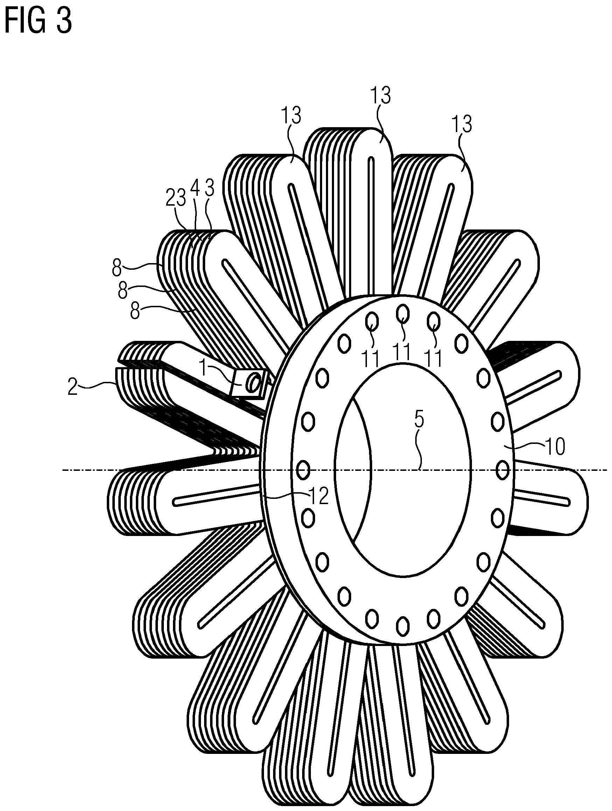

Figur 3 zeigt ein drittes Beispiel eines Widerstandsmoduls. Aufgrund der perspektivischen Darstellung sind der zweite Anschlusspunkt 2 nicht dargestellt , wobei zum Zwecke einer verbesserten Übersichtlichkeit die jeweiligen Lagenanfangspunkte 6, Lagenendpunkte 7 und Verbindungspunkte 9 nicht näher bezeichnet sind. Das Widerstandsmodul weist im Rahmen des dritten Beispiels die Lagen 3, 4, 23 usw. auf, welche wie im ersten Beispiel schraubenbahnförmig und koaxial zur Achse 5 oder wie im zweiten Beispiel abwechselnd mit unterschiedlichem Drehsinn ausgestaltet sein können.

Das vorliegende Widerstandsmodul zeichnet sich dadurch aus, dass die Lagen 3, 4, 23 usw. in Umfangsrichtung mäanderförmig ausgestaltet sind, wobei die Mäander 13 nach radial außen ragen. Weiterhin weist das Widerstandsmodul eine Nabe 10 auf, mit welcher die Lagen 3, 4, 23 usw. drehfest verbunden sind und welche von den Lagen 3, 4, 23 usw. mittels einer zweiten Isolierschicht 12 elektrisch isoliert ist.

Die Nabe 10 weist in axialer Richtung eingebrachte Bohrungen 11 auf, mittels welchen die Nabe 10 und somit das Widerstandsmodul an einer Welle bzw. einem Läufer der elektrischen Maschine befestigt werden kann.

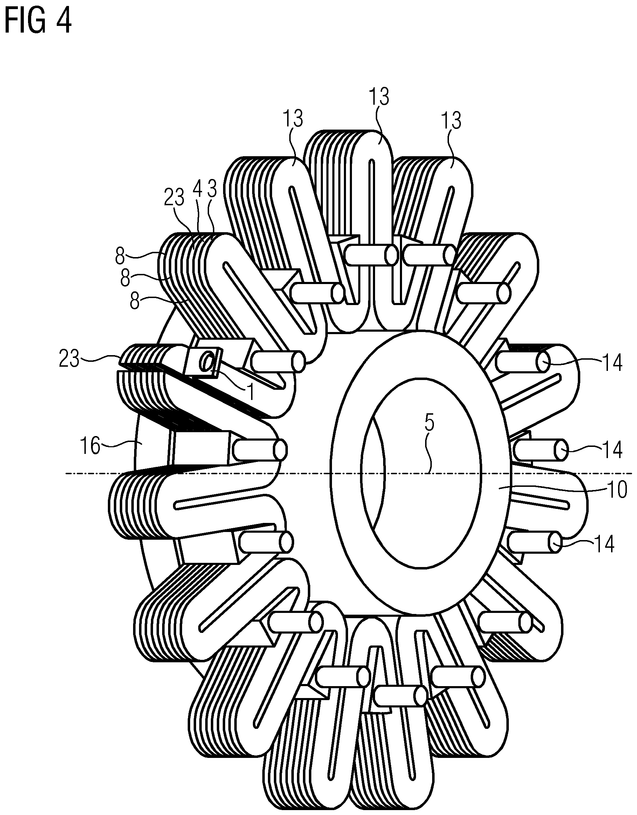

Figur 4 zeigt ein Ausführungsbeispiel des erfindungsgemäßen Widerstandsmoduls, wobei die Darstellung jener des dritten Beispiels entspricht. Die Lagen 3, 4, 23 usw. können ähnlich die beim Widerstandsmodul des dritten Beispiels ausgestaltet sein. Im Rahmen des Ausführungsbeispiels weist das Widerstandsmodul Befestigungselemente 14 auf, welche jeweils zwischen zwei in Umfangsrichtung benachbarten Mäandern 13 und radial außen an den Lagen 3, 4, 23 usw. angeordnet sind. Die jeweiligen Befestigungselemente 14 sind dabei fest mit den Lagen 3, 4, 23 usw. verbunden.

Das Widerstandsmodul weist zusätzlich einen Befestigungsring 16 auf, welcher koaxial zur Achse 5 angeordnet ist und welcher in axialer Richtung an die Lagen 3, 4, 23 usw. anschließend angeordnet ist. Die jeweiligen Befestigungselemente 14 sind fest mit dem Befestigungsring 16 verbunden, welcher wiederum drehfest mit der Nabe 10 verbunden ist. Im Rahmen des Ausführungsbeispiels weisen die jeweiligen Befestigungselemente 14 axial aus dem Widerstandsmodul heraus ragende Bolzen auf, welche zur Verbindung des Widerstandsmoduls mit einer Welle bzw. einem Läufer der elektrischen Maschine verwendet werden können.

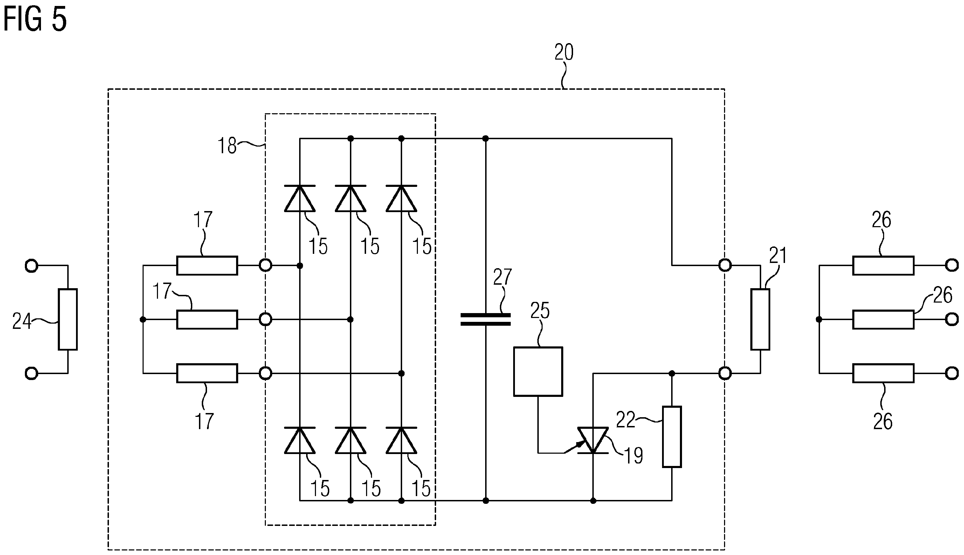

Figur 5 zeigt einen Schaltplan eines Ausführungsbeispiels einer erfindungsgemäßen elektrischen Maschine. Die elektrische Maschine weist eine Primärwicklung 24 auf, mittels welcher ein elektrischer Strom an Sekundärwicklungen 17 übertragbar ist. Ein an die Sekundärwicklungen 17 übertragener Wechselstrom kann mittels eines Gleichrichters 18, welcher Gleichrichterdioden 15 aufweist, gleichgerichtet werden und anschließend mittels eines Kondensators 27 geglättet werden. Der gleichgerichtete und geglättete Strom wird einer Läuferwicklung 21 zugeführt, deren Magnetfeld mit einem von Statorwicklungen 26 erzeugten Magnetfeld wechselwirkt.

Zur Reduktion des Stroms während der Anlaufphase ist ein elektrischer Widerstand 22 des erfindungsgemäßen Widerstandsmoduls in Reihe mit der Läuferwicklung 21 geschaltet. Die Reduktion des Anlaufstroms bewirkt dabei ein erhöhtes Anlaufmoment, wodurch der Läufer besonders dynamisch beschleunigt werden kann. Der Widerstand 22 des Widerstandsmoduls kann mittels eines als Thyristor ausgeführten Schalters 19 kurzgeschlossen werden, welcher parallel zum Widerstand 22 angeordnet ist. Eine Steuerungseinheit 25 beaufschlagt den Schalter 19 hierfür mit entsprechenden Steuersignalen, wobei die Steuerungseinheit 25 hierfür passend mit dem Schalter 19 verbunden ist und zum Beispiel die Spannung am Kondensator 25, die Spannung und/oder den Strom an den Sekundärwicklungen 17 oder dergleichen erfasst.

Die elektrische Maschine weist somit einen Läufer mit der Läuferwicklung 21 und eine Erregermaschine 20 auf, wobei die Erregermaschine 20 die Sekundärwicklungen 17, den Gleichrichter 18, den Kondensator 27, die Steuerung 25, den Schalter 19 und das Widerstandsmodul 22 umfasst. Insbesondere kann die Erregermaschine 20 als Teil des Läufers ausgeführt werden. Weiterhin weist die elektrische Maschine eine Primärwicklung 24 und Statorwicklungen 26 auf.

Zusammenfassend betrifft die Erfindung ein Widerstandsmodul zur Anlaufmomenterhöhung für einen Läufer einer elektrischen Maschine mit einer Läuferwicklung. Weiterhin betrifft die Erfindung eine Erregermaschine, einen Läufer und eine elektrische Maschine, welche jeweils zumindest ein derartiges Widerstandsmodul aufweisen. Um eine Alternative zu bekannten Lösungen zur Erhöhung des Anlaufmoments bereitzustellen, wird vorgeschlagen, dass das Widerstandsmodul aufweist:
- einen ersten Anschlusspunkt und einen zweiten Anschlusspunkt,
- zumindest zwei elektrisch leitende Lagen,
wobei die zumindest zwei Lagen mit dem ersten Anschlusspunkt und mit dem zweiten Anschlusspunkt elektrisch verbunden sind,
wobei die zumindest zwei Lagen jeweils eine Achse des Widerstandsmoduls zumindest teilweise in Umfangsrichtung umschließen und jeweils einen Lagenanfangspunkt und einen Lagenendpunkt aufweisen,
- eine jeweilige erste Isolierschicht, welche jeweils zwischen zwei Lagen angeordnet ist,
- einen jeweiligen Verbindungspunkt, an welchem der Lagenendpunkt einer jeweiligen Lage mit dem Lagenanfangspunkt der jeweils folgenden Lage elektrisch verbunden ist,
wobei zumindest eine der Lagen in Umfangsrichtung mäanderförmig ausgestaltet ist und die Mäander nach radial außen ragen,
wobei das Widerstandsmodul zumindest ein Befestigungselement aufweist, welches jeweils zwischen zwei in Umfangsrichtung benachbarten Mäandern und radial außen an den zumindest zwei Lagen angeordnet ist.

## Patentansprüche

1. Widerstandsmodul zur Anlaufmomenterhöhung für einen Läufer einer elektrischen Maschine mit einer Läuferwicklung (21), wobei das Widerstandsmodul aufweist:
- einen ersten Anschlusspunkt (1) und einen zweiten Anschlusspunkt (2),
- zumindest zwei elektrisch leitende Lagen (3, 4, 23),
wobei die zumindest zwei Lagen (3, 4, 23) mit dem ersten Anschlusspunkt (1) und mit dem zweiten Anschlusspunkt (2) elektrisch verbunden sind,
wobei die zumindest zwei Lagen (3, 4, 23) jeweils eine Achse (5) des Widerstandsmoduls zumindest teilweise in Umfangsrichtung umschließen und jeweils einen Lagenanfangspunkt (6) und einen Lagenendpunkt (7) aufweisen,
- eine jeweilige erste Isolierschicht (8), welche jeweils zwischen zwei Lagen (3, 4, 23) angeordnet ist,
- einen jeweiligen Verbindungspunkt (9), an welchem der Lagenendpunkt (7) einer jeweiligen Lage (3, 4, 23) mit dem Lagenanfangspunkt (6) der jeweils folgenden Lage (3, 4, 23) elektrisch verbunden ist,
wobei zumindest eine der Lagen (3, 4, 23) in Umfangsrichtung mäanderförmig ausgestaltet ist und die Mäander (13) nach radial außen ragen,
wobei das Widerstandsmodul zumindest ein Befestigungselement (14) aufweist, welches jeweils zwischen zwei in Umfangsrichtung benachbarten Mäandern (13) und radial außen an den zumindest zwei Lagen (3, 4, 23) angeordnet ist.

2. Widerstandsmodul nach Anspruch 1,
wobei die zumindest zwei Lagen (3, 4, 23) koaxial zur Achse (5) angeordnet und schraubenbahnförmig ausgestaltet sind.

3. Widerstandsmodul nach Anspruch 1,
wobei jeweils benachbarte Lagen (3, 4, 23) von ihrem jeweiligen Lagenanfangspunkt (6) zu ihrem jeweiligen Lagenendpunkt (7) im entgegen gesetzten Drehsinn verlaufen.

4. Widerstandsmodul nach einem der vorhergehenden Ansprüche,
wobei zumindest eine der Lagen (3, 4, 23) als Flachmaterial oder Blech ausgestaltet ist und/oder hauptsächlich aus Aluminium besteht.

5. Widerstandsmodul nach einem der vorhergehenden Ansprüche, wobei das Widerstandsmodul eine koaxial zur Achse (5) angeordnete Nabe (10) aufweist, mit welcher die zumindest zwei Lagen (3, 4, 23) drehfest verbunden sind,
wobei die Nabe (10) drehfest mit einer Welle der elektrischen Maschine verbindbar ist.

6. Widerstandsmodul nach Anspruch 5,
wobei eine zweite Isolierschicht (12) zwischen der Nabe (10) und den zumindest zwei Lagen (3, 4, 23) angeordnet ist.

7. Widerstandsmodul nach einem der vorhergehenden Ansprüche,
wobei das zumindest eine Befestigungselement (14) fest mit den zumindest zwei Lagen (3, 4, 23) verbunden ist,
wobei eine dritte Isolierschicht zwischen dem zumindest einen Befestigungselement (14) und den zumindest zwei Lagen (3, 4, 23) angeordnet ist.

8. Widerstandsmodul nach einem der vorhergehenden Ansprüche,
wobei das Widerstandsmodul einen koaxial zur Achse (5) angeordneten Befestigungsring (16) aufweist, welcher in axialer Richtung an die zumindest zwei Lagen (3, 4, 23) anschließend angeordnet ist,
wobei das zumindest eine Befestigungselement (14) drehfest mit dem Befestigungsring (16) verbunden ist.

9. Erregermaschine (20) zur Anlaufmomenterhöhung für einen Läufer einer elektrischen Maschine mit einer Läuferwicklung (21), wobei die Erregermaschine (20) aufweist:
- eine drehfest mit einer Welle der elektrischen Maschine verbindbare Sekundärwicklung (17),
- einen mit der Sekundärwicklung (17) elektrisch verbundenen Gleichrichter (18),
- ein mit dem Gleichrichter (18) elektrisch verbundenes Widerstandsmodul nach einem der vorhergehenden Ansprüche.

10. Erregermaschine (20) nach Anspruch 9,
wobei die zumindest zwei Lagen (3, 4, 23) des Widerstandsmoduls mittels eines ersten Schalters (19) überbrückbar sind.

11. Läufer einer elektrischen Maschine aufweisend
- ein Widerstandsmodul nach einem der Ansprüche 1-8 oder eine Erregermaschine (20) nach Anspruch 9 oder 10,
- eine Läuferwicklung (21), welche mit dem Widerstandsmodul elektrisch verbunden ist.

12. Läufer nach Anspruch 11,
wobei die zumindest zwei Lagen (3, 4, 23) des Widerstandsmoduls mittels eines zweiten Schalters überbrückbar sind.

13. Elektrische Maschine mit
einem Widerstandsmodul nach einem der Ansprüche 1-8 oder einer Erregermaschine (20) nach Anspruch 9 oder 10 oder einem Läufer nach Anspruch 11 oder 12.

## Claims

1. Resistance module for increasing the runup torque for a rotor of an electric machine with a rotor winding (21), wherein the resistance module has:
- a first connection point (1) and a second connection point (2),
- at least two electrically-conductive layers (3, 4, 23),
wherein the at least two layers (3, 4, 23) are electrically connected to the first connection point (1) and to the second connection point (2),
wherein the at least two layers (3, 4, 23) each surround an axis (5) of the resistance module at least partially in the circumferential direction and each have a layer start point (6) and a layer end point (7),
- a corresponding first insulating layer (8), which is disposed between two layers (3, 4, 23) in each case,
- a corresponding tie point (9), to which the layer end point (7) of a corresponding layer (3, 4, 23) is electrically connected to the layer start point (6) of the corresponding following layer (3, 4, 23),
wherein at least one of the layers (3, 4, 23) is embodied in an undulating shape in the circumferential direction and the undulations (13) project radially outwards,
wherein the resistance module has at least one fastening element (14), which is disposed in each case between two neighbouring undulations (13) in the circumferential direction and on the radial outside of the at least two layers (3, 4, 23).

2. Resistance module according to claim 1,
wherein the at least two layers (3, 4, 23) are disposed coaxially to the axis (5) and are embodied in a helical shape.

3. Resistance module according to claim 1,
wherein neighbouring layers (3, 4, 23) in each case run from their corresponding layer start point (6) to their corresponding layer end point (7) in the opposing direction of rotation.

4. Resistance module according to one of the preceding claims,
wherein at least one of the layers (3, 4, 23) is embodied from flat material or sheet steel and/or consists mainly of aluminium.

5. Resistance module according to one of the preceding claims,
wherein the resistance module has a hub (10) disposed coaxially to the shaft (5), with which the at least two layers (3, 4, 23) are connected in a torsion-proof manner,
wherein the hub (10) is able to be connected in a torsion-proof manner with a shaft of the electric machine.

6. Resistance module according to claim 5,
wherein the second insulating layer (12) is disposed between the hub (10) and the at least two layers (3, 4, 23).

7. Resistance module according to one of the preceding claims,
wherein the at least one fastening element (14) is connected rigidly to the at least two layers (3, 4, 23),
wherein a third insulating layer is disposed between the at least one fastening element (14) and the at least two layers (3, 4, 23).

8. Resistance module according to one of the preceding claims,
wherein the resistance module has a fastening ring (16) disposed coaxially to the shaft (5), which is disposed in the axial direction adjacent to the at least two layers (3, 4, 23),
wherein the at least one fastening element (14) is connected to the fastening ring (16) in a torsion-proof manner.

9. Exciter (20) for increasing the runup torque for a rotor of an electric machine with a rotor winding (21), wherein the electric machine (20) has the following:
- a secondary winding (17) able to be connected in a torsion-proof manner to a shaft of the electric machine,
- a rectifier (18) connected electrically to the secondary winding (17)
- a resistance module according to one of the preceding claims connected electrically to the rectifier (18).

10. Exciter (20) according to claim 9,
wherein the at least two layers (3, 4, 23) of the resistance module are able to be bridged by means of a first switch (19).

11. Rotor of an electric machine, having
- a resistance module according to one of claims 1-8 or an exciter (20) according to claim 9 or 10.
- a rotor winding (21), which is electrically connected to the resistance module.

12. Rotor according to claim 11,
wherein the at least two layers (3, 4, 23) of the resistance module are able to be bridged by a second switch.

13. Electric machine with
a resistance module according to one of claims 1-8 or an exciter (20) according to claim 9 or 10 or a rotor according to claim 11 or 12.

## Revendications

1. Module de résistance pour augmenter le couple de démarrage d'un rotor d'une machine électrique ayant un enroulement ( 21 ) rotorique, le module de résistance ayant :
- un premier point ( 1 ) de connexion et un deuxième point ( 2 ) de connexion,
- au moins deux strates ( 3, 4, 23 ) conductrices de l'électricité, les au moins deux strates ( 3, 4, 23 ) étant reliées électriquement au premier point ( 1 ) de connexion et au deuxième point ( 2 ) de connexion,
dans lequel les au moins deux strates ( 3, 4, 23 ) entourent chacune un axe ( 5 ) du module de résistance, au moins en partie dans la direction périphérique, et ont respectivement un point ( 6 ) de début de strate et un point ( 7 ) de fin de strate,
- une première couche ( 8 ) isolante, qui est disposée respectivement entre deux strates ( 3, 4, 23 ),
- un point ( 9 ) de liaison où le point ( 7 ) de fin d'une strate ( 3, 4, 23 ) est relié électriquement au point ( 6 ) de début de la strate ( 3, 4, 23 ) suivante,
dans lequel au moins l'une des strates ( 3, 4, 23 ) est de forme sinueuse dans la direction périphérique et les sinuosités ( 13 ) font saillie vers l'extérieur radialement,
dans lequel le module de résistance a au moins un élément ( 14 ) de fixation, qui est disposé entre deux sinuosités ( 13 ) voisins dans la direction périphérique et radialement à l'extérieur sur les au moins deux strates ( 3, 4, 23 ).

2. Module de résistance suivant la revendication 1,
dans lequel les au moins deux strates ( 3, 4, 23 ) sont disposées coaxialement à l'axe ( 5 ) et sont conformées en forme de bande hélicoïdale.

3. Module de résistance suivant la revendication 1,
dans lequel des strates ( 3, 4, 23 ) voisines s'étendent, de leur point ( 6 ) de début à leur point ( 7 ) de fin, dans des sens de rotation contraires.

4. Module de résistance suivant l'une des revendications précédentes,
dans lequel au moins l'une des strates ( 3, 4 23 ) est conformée sous la forme d'un matériau plat ou d'une tôle et/ou est principalement en aluminium.

5. Module de résistance suivant l'une des revendications précédentes,
dans lequel le module de résistance a un moyeu ( 10 ), qui est disposé coaxialement à l'axe ( 5 ) et par lequel les au moins deux strates ( 3, 4, 23 ) sont solidaires en rotation,
dans lequel le moyeu ( 10 ) peut être rendu solidaire en rotation d'un arbre de la machine électrique.

6. Module de résistance suivant la revendication 5,
dans lequel une deuxième couche ( 12 ) isolante est disposée entre le moyeu ( 10 ) et les au moins deux strates ( 3, 4, 23 ).

7. Module de résistance suivant l'une des revendications précédentes,
dans lequel le au moins un élément ( 14 ) de fixation est relié fixement aux au moins deux strates ( 3, 4, 23 ),
dans lequel une troisième couche isolante est disposée entre le au moins un élément ( 14 ) de fixation et les au moins deux strates ( 3, 4, 23 ).

8. Module de résistance suivant l'une des revendications précédentes,
dans lequel le module de résistance a un anneau ( 16 ) de fixation, qui est disposé coaxialement à l'axe ( 5 ) et qui est disposé, en se raccordant dans la direction axiale, aux au moins deux strates ( 3, 4, 23 ),
le au moins un élément ( 14 ) de fixation étant solidaire en rotation de l'anneau ( 16 ) de fixation.

9. Machine ( 20 ) excitatrice d'augmentation du couple de démarrage d'un rotor d'une machine électrique ayant un enroulement ( 21 ) rotorique, la machine ( 20 ) excitatrice ayant :
- un enroulement ( 17 ) secondaire pouvant être rendu solidaire en rotation d'un arbre de la machine électrique,
- un redresseur ( 18 ) relié électriquement à l'enroulement ( 17 ) secondaire,
- un module de résistance, qui est relié électriquement au redresseur ( 18 ) et qui est suivant l'une des revendications précédentes.

10. Machine ( 20 ) excitatrice suivant la revendication 9,
dans laquelle les au moins deux strates ( 3, 4, 23 ) du module de résistance peuvent être court-circuitées au moyen d'un premier interrupteur ( 19 ).

11. Rotor d'une machine électrique ayant
- un module de résistance suivant l'une des revendications 1 à 8 ou une machine ( 20 ) excitatrice suivant la revendication 9 ou 10,
- un enroulement ( 21 ) rotorique, qui est relié électriquement au module de résistance.

12. Rotor suivant la revendication 11,
dans lequel les au moins deux strates ( 3, 4, 23 ) du module de résistance peuvent être court-circuitées au moyen d'un deuxième interrupteur.

13. Machine électrique comprenant
un module de résistance suivant l'une des revendications 1 à 8 ou une machine ( 20 ) excitatrice suivant la revendication 9 ou 10, ou un rotor suivant la revendication 11 ou 12.
